# DEMANDE DE BREVET EUROPEEN

(11) **EP 0 685 433 A1**
(43) Date de publication de la demande: **06.12.1995**
(21) Numéro de dépôt: 95401240.7
(22) Date de dépôt: 29.05.1995
(51) Int. Cl.: C02F 3/30, C02F 3/10

(54) **Procédé de traitement d'effluents liquides par boue activée**

(30) Priorité: 02.06.1994 FR 9406765
(71) Demandeur: DEGREMONT, F-92508 Rueil-Malmaison Cédex (FR)
(72) Inventeur: Pannier, Michèle, F-78290 Croissy sur Seine (FR); Chudoba, Pavel, F-78230 Le Pecq (FR)
(74) Mandataire: Armengaud Ainé, Alain

(57) **Abrégé**

Ce procédé est caractérisé en ce que l'on injecte un matériau inerte d'origine minérale dans la boue activée, ce matériau étant immédiatement dispersé de manière homogène dans la boue activée, afin de créer une culture mixte comportant à la fois et en un seul floc bactérien, des espèces hétérotrophes libres et autotrophes partiellement fixées sur les particules dudit matériau à l'intérieur du floc, la structure de ce dernier, qui contient de l'ordre de 40 à 65 % de matière organique, le reste étant ledit matériau inerte, étant constituée d'une ou de plusieurs particules dudit matériau entourées de boue activée, et en ce que l'extraction de la boue en excès s'effectue en continu et sans séparation du matériau injecté.

## Description

La présente invention est relative à un procédé de traitement d'effluents liquides, notamment d'eaux usées, par boue activée.

A l'heure actuelle, et malgré un développement intensif des procédés à culture fixée, la plupart des stations d'épuration des eaux urbaines sont équipées en vue de la mise en oeuvre du procédé à boue activée. En France, un tel procédé assure le traitement d'environ 80 % du volume total des effluents municipaux rejetés. Le principe, sur lequel repose ce procédé, est celui de l'élimination de la pollution carbonée, azotée et phosphorée de l'eau usée à l'aide d'une culture complexe de micro-organismes, appelée boue activée. L'eau usée, après avoir subi des étapes de pré-traitement mécanique, est mise en contact avec la boue activée, et en présence de l'oxygène, la pollution est transférée de la phase liquide (eau usée) en phase solide (boue activée). Après un temps de contact nécessaire pour les réactions biochimiques ayant lieu au cours du traitement, le mélange de l'eau et de la boue est envoyé dans le clarificateur, pour y subir une étape ultime du traitement : la séparation de la boue et de l'eau traitée par décantation. La boue décantée est ainsi épaissie pour être ensuite recirculée en tête du bassin d'aération, afin d'y participer à un nouveau cycle de traitement. Ce cycle se répète de façon continue. La pollution transférée dans la phase solide est évacuée sous la forme de boue en excès, extraite en continu.

Une boue activée est définie comme étant un mélange de différentes espèces microbiennes telles que les bactéries, les protozoaires fixés ou libres, les métazoaires, les champignons et les algues. Les micro-organismes forment ensemble des colonies structurées sous forme de flocons, qui constituent la forme indispensable pour une décantation correcte. La taille et le caractère des flocs sont déterminés par les conditions opératoires appliquées au procédé.

Le fonctionnement correct du procédé à boue activée dépend strictement des conditions opératoires, telles que la charge appliquée, l'âge de la boue, le temps de séjour hydraulique et autres, appliquées au système. En effet, ces conditions ont une influence sur la sélection des espèces microbiennes de la boue activée et par conséquent elles en déterminent la qualité. La qualité de la boue et sa composition influencent à leur tour les capacités de la boue à décanter. Ainsi, très souvent, l'étape qui limite le procédé à boue activée est la séparation par décantation, cette limitation résultant des faibles capacités à décanter de certaines boues. Ces problèmes sont désignés par incidents dus au foisonnement ("bulking") filamenteux. En effet, sous certaines conditions opératoires, la boue activée contient des quantités élevées de micro-organismes dits filamenteux qui se caractérisent par une faible capacité à décanter.

Par ailleurs, lorsque le procédé à boue activée doit assurer une élimination partielle ou complète de l'azote, la pression sélective résultant des conditions opératoires doit assurer la présence à la fois des espèces assurant l'étape de nitrification (bactéries autotrophes) et des espèces responsables de la dénitrification (bactéries hétérotrophes). Etant donné les taux de croissance très différents de ces deux types de bactéries, il n'est pas toujours évident d'appliquer des conditions optimales pour assurer la présence, en nombre suffisant, des deux populations. De nouveau, on s'aperçoit que la pression sélective ainsi que la dynamique des populations microbiennes jouent un rôle décisif dans le processus de traitement des eaux usées par la boue activée.

Dans le but d'améliorer le fonctionnement et les performances du procédé à boue activée, on a proposé différentes techniques et variantes telles que notamment des modifications d'écoulement hydraulique, des modifications du système d'aération ou des additions de différents matériaux.

Les modifications de l'écoulement consistent en l'incorporation de sélecteurs ou de zones de contact en tête du bassin d'aération dans le but de créer le gradiant de concentration et de modifier ainsi la pression sélective exercée sur des espèces microbiennes.

Les additions de différents matériaux, tels que le charbon actif (PAC), l'anthracite ou les diatomés ont pour but d'améliorer d'une part l'élimination des composés biologiquement résistants ou des inhibiteurs bactériens par leur adsorption sur le matériau ajouté, et d'autre part elles contribuent à une meilleure formation des flocs de boue activée. Ces matériaux agissent également en tant que matériaux support pour la croissance bactérienne sur leur surface. En règle générale, tous les matériaux ainsi ajoutés sont, après le processus de traitement, récupérés et régénérés afin de pouvoir être réinjectés dans un nouveau cycle de traitement. Etant donné leur prix parfois très élevé, il est généralement exclu d'envisager leur perte de manière constante et en quantité importante, et ceci malgré les coûts liés à leur récupération et régénération (notamment dans le cas du PAC).

On trouvera des exemples de l'état antérieur de la technique mentionnée ci-dessus, notamment dans les publications ci-après : US-A- 1 617 014 (addition de diatomés) ; FR-B- 1 411 792 (addition de matériaux minéraux tels que du sable) ; US-A- 2 059 286 (injection de charbon actif PAC).

Partant de cet état de la technique, la présente invention se propose de mettre en oeuvre un matériau inerte d'origine minérale, notamment dans le but de réhabiliter des installations à boue activée existantes, qui sont à l'heure actuelle surchargées ou qui posent des problèmes notamment hydrauliques et/ou biologiques.

En conséquence cette invention concerne un procédé de traitement d'effluents liquides, notamment d'eaux usées, en vue de l'élimination de la pollution carbonée, azotée et phosphorée, à l'aide d'une boue activée, selon lequel l'effluent, après avoir subi des pré-traitements mécaniques, est mis au contact de la boue activée, le mélange effluent-boue activée étant ensuite soumis à une clarification-décantation afin de séparer l'eau traitée de la boue épaissie, cette dernière étant ensuite recyclée en tête du traitement d'aération, l'excès de boue étant évacué en continu, ce procédé étant caractérisé en ce que l'on injecte, dans la boue activée, un matériau inerte d'origine minérale, ce matériau étant immédiatement dispersé de manière homogène dans la boue activée, afin de créer une culture mixte comportant à la fois et en un seul floc bactérien, des espèces hétérotrophes libres et autotrophes partiellement fixées sur les particules dudit matériau à l'intérieur du floc, la structure de ce dernier, qui contient de l'ordre de 40 à 65 % de matière organique, le reste étant ledit matériau inerte, étant constituée d'une ou de plusieurs particules dudit matériau entourées de boue activée, et en ce que l'extraction de la boue en excès s'effectue en continu et sans séparation du matériau injecté.

Selon un mode de mise en oeuvre préféré du procédé de l'invention, le matériau inerte d'origine minérale est injecté dans le circuit de recirculation des boues. Ainsi qu'on le comprend, le procédé selon la présente invention comprend trois étapes successives :
1/ Le matériau inerte d'origine minérale est injecté en particules, de façon continue ou discontinue, dans la boue activée recirculée en tête du traitement de manière qu'il réduise progressivement la partie organique de la boue activée en formant ainsi un mélange caractérisé par le fait que sa fraction organique est réduite à 40 à 65 % ;
2/ La présence du matériau inerte sous la forme d'un mélange homogène avec la boue activée contribue à une formation de flocs structurés et en outre alourdis par rapport à une boue activée classique, ce qui entraine une modification de la pression sélective des espèces de la boue activée ;
3/ L'extraction de la boue en excès s'effectue en continu et sans séparation du matériau injecté, les pertes en continu du matériau évacué en même temps que la boue en excès étant compensées d'une façon permanente par les additions du matériau vierge.

On décrira maintenant à titre d'exemples non limitatifs divers modes de mise en oeuvre du procédé objet de l'invention.

Le matériau inerte d'origine minérale est injecté de façon continue ou discontinue sous la forme d'une suspension ou à l'état pulvérulent, en un emplacement de la ligne de traitement judicieusement déterminé, de préférence dans le circuit de recirculation des boues. Ce matériau, immédiatement après son injection, se disperse d'une manière homogène dans la boue activée, en constituant une nouvelle base de la structure des flocs ainsi formés. La présence de ce matériau minéral (qui est un matériau inerte et non un agent floculant) dans le floc nouvellement formé, conduit à un remplacement d'une partie de la biomasse organique par ce matériau inerte minéral. Il en résulte une diminution de la fraction organique. La biomasse nouvellement formée contient de 40 à 65 % de matière organique, le reste étant constitué du matériau inerte ainsi injecté.

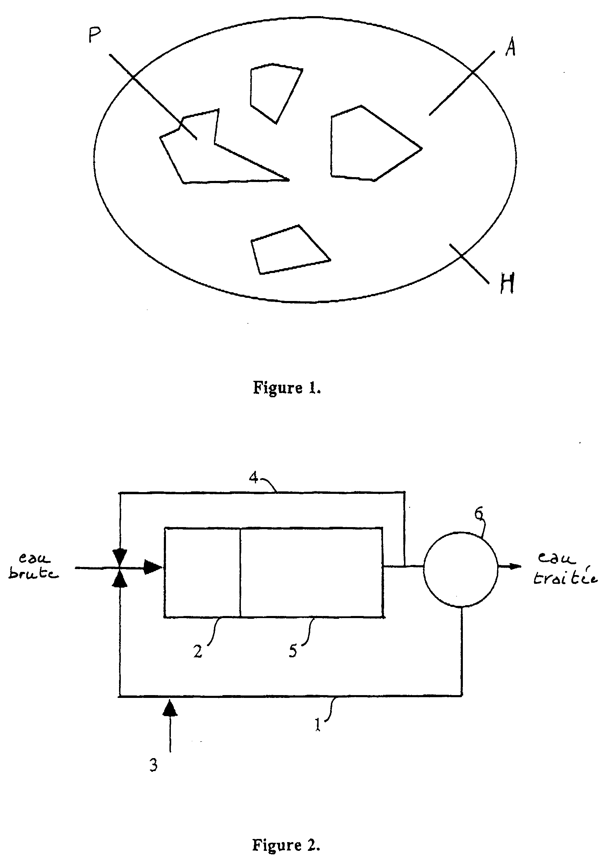

Le mélange boue activée-matériau inerte ainsi constitué arrive en tête du procédé, ce dernier comportant une zone anoxique suivie d'une zone aérée. En l'absence d'oxygène sous forme dissoute et de bulles d'air, la sélection des micro-organismes s'effectue tout d'abord dans ce milieu anoxique, les micro-organismes favorisés étant ceux capables d'utiliser un autre accepteur d'électrons que l'oxygène dissout, en l'occurence l'azote nitrique. Il s'agit de micro-organismes hétérotrophes, qui constituent le floc extérieur, enveloppant une ou plusieurs particules P du matériau inerte (voir la figure 1 des dessins annexés). La structure plus ou moins "granuleuse" des flocs permet aux bactéries hétérotrophes H de se développer préférentiellement sur la périphérie du floc. L'étape suivante se déroule en milieu aéré. Ainsi qu'on le voit sur cette figure 1, les bactéries autotrophes A viennent alors se fixer à l'intérieur du floc nouvellement formé, partiellement fixées sur la surface des particules du matériau, et partiellement en état floculé, réduisant ainsi l'importance du paramètre que constitue l'âge de la boue.

Les conditions influençant la sélection des espèces bactériennes comportent donc des périodes successives anoxiques et aérobies. Le milieu aéré, favorable au développement des bactéries autotrophes responsables de la nitrification biologique, contribue à la sélection de ces espèces, mais uniquement lorsque sont réunies les conditions favorables à la croissance de ces bactéries autotrophes. Parmi ces conditions optimales, figurent une faible charge organique, un âge de boue adéquat et dépendant de la température, et une concentration suffisante de l'oxygène dissout.

Lorsque la charge organique est trop importante, la compétition des bactéries autotrophes et hétérotrophes tourne à l'avantage net des hétérotrophes, grâce à leur taux de croissance plusieurs fois supérieur à celui des autotrophes. Lorsque l'âge de la boue est trop faible, le faible taux de croissance des bactéries autotrophes ne peut assurer leur renouvellement, et leur lessivage progressif entraine une réduction considérable des capacités de nitrification.

L'injection dans la boue en recirculation du matériau minéral inerte selon la présente invention, favorisant la formation d'une boue restructurée, permet de réduire les volumes d'extraction, ce qui se traduit par une augmentation de la concentration de la biomasse présente dans le réacteur. Ceci a pour conséquence de permettre le développement d'une population bactérienne autotrophe qui autrement ne trouverait pas sa place dans le milieu. Ce développement des bactéries autotrophes permet de franchir des seuils d'épuration différents de ceux obtenus par une épuration classique, grâce à la diminution du taux de charge polluante appliquée aux micro-organismes, et donc de nitrifier. En d'autres termes, lorsqu'un procédé classique de boue activée ne permet pas une nitrification en raison d'une charge organique trop élevée ou d'un âge de boue trop faible, un procédé assisté par le matériau minéral inerte arrive, malgré ces inconvénients, à nitrifier et par conséquent à dénitrifier.

La structure plus minérale de la boue modifiée par l'invention par la présence du matériau minéral inerte donne à cette boue d'excellentes caractéristiques physiques du point de vue de ses capacités à l'épaississement et à la deshydratation. Cette caractéristique est appréciée notamment en traitement de boue où des économies en polymères et autres additifs sont ainsi possibles.

A titre d'exemple non limitatif, on a mentionné ci-après les caractéristiques d'un matériau minéral inerte pouvant être utilisé dans la mise en oeuvre du procédé de l'invention :

| | |
|---|---|
| - fraction granulométrique active : | 50-250 microns |
| - densité réelle : | 2000-3000 kg/m3 |
| - dose injectée : | entre 80 et 150 g/m3 d'eau |
| - énergie de brassage nécessaire : | > 25 W/m3 du bassin |
| - composition de la boue nouvellement formée : | 40-65 % mat. organique et 60-35 % mat. minéral inerte |
| - exemple de matériau inerte : | Argile kaolinique, issue de l'exploitation du kaolin. |

On décrira ci-après en référence aux figures 2 à 4 des modes de mise en oeuvre du procédé objet de la présente invention. Les figures 2 à 4 représentent de façon schématique des installations de traitement d'effluents liquides, notamment d'eau usée, par le procédé à boue activée.

### Exemple 1 (figure 2) :

L'installation de type connu comporte une zone anoxique 2 en tête, suivie d'une zone aérée 5 et d'une zone de clarification-décantation 6. Le matériau minéral inerte est injecté en 3 dans le circuit 1 de recirculation des boues, de façon à être rapidement homogénéisé afin de former la nouvelle structure des flocs définie ci-dessus. La liqueur mixte riche en nitrates 4 est recirculée en tête, dans la zone anoxique 2.

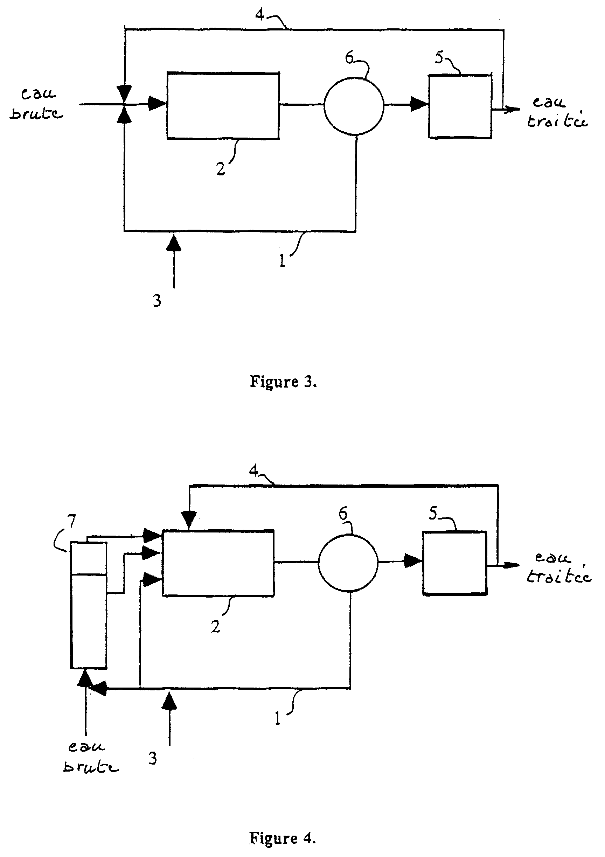

### Exemple 2 (figure 3) :

Selon l'invention, le matériau minéral inerte est injecté en 3 dans le circuit 1 de recirculation des boues provenant du décanteur 6. Le système comporte une étape de dénitrification 2 par la boue activée, dans un bassin anoxique 2 en tête. L'étape de nitrification est assurée dans ce cas par un procédé à cultures fixées 5 en nitrification tertiaire. La liqueur contenant les nitrates 4 est recirculée dans le bassin anoxique 2. Dans cet exemple de mise en oeuvre, la sélection des espèces s'effectue exclusivement en milieu anoxique. Ainsi, seule la population hétérotrophe est présente. Une partie de celle-ci est fixée sur les particules du matériau organique inerte, l'autre se trouvant dans le floc qui entoure le noyau minéral. En dehors de l'absence d' autotrophes, les caractéristiques d'une telle boue granuleuse sont les mêmes que celles décrites précédemment.

### Exemple 3 (figure 4) :

Ici encore le matériau inerte minéral est injecté en recirculation de boue 1 dans un système qui comporte une étape de dénitrification par la zone anoxique 2, précédée par un réacteur à lit de boue 7 fonctionnant en mode anaérobie. La nitrification s'effectue par un procédé à culture fixée 5, en nitrification tertiaire. La liqueur contenant les nitrates 4 est recirculée dans le bassin anoxique 2 en tête de l'installation. Le principe de ce mode de mise en oeuvre est similaire à celui de l'exemple 2.

On a mentionné ci-dessus la possibilité, grâce au procédé de l'invention, de réhabiliter des installations à boue activée existantes qui sont surchargées ou qui présentent des problèmes hydrauliques et/ou biologiques. Lors d'une telle réhabilitation, le procédé selon la présente invention apporte les résultats suivants :
- augmentation de la concentration de la boue dans le système, ce qui se traduit par une réduction de la charge massique appliquée ;
- modification des conditions influançant la sélection des espèces permettant une cohabitation des hétérotrophes et des autotrophes, même en condition moins favorable pour les autotrophes ;
- possibilité de nitrifier et dénitrifier par la même culture constituée d'autotrophes partiellement fixés sur le matériau minéral inerte, et d'hétérophes libres, ceci même dans des conditions pour lesquelles la boue activée classique ne nitrifie plus ;
- obtention d'une structure de boue optimale ayant pour base une ou plusieurs particules du matériau minéral inerte, cette structure étant alourdie, ce qui élimine tout problème de séparation par décantation.
- extraction d'une boue d'excellente qualité en vue du traitement ultérieur, ce qui permet des économies en matériaux classiquement utilisés.

## Revendications

1. Procédé de traitement d'effluents liquides, notamment d'eaux usées, en vue de l'élimination de la pollution carbonée, azotée et phosphorée, à l'aide d'une boue activée, selon lequel l'effluent, après avoir subi des pré-traitements mécaniques, est mis au contact de la boue activée, le mélange effluent-boue activée étant ensuite soumis à une clarification-décantation afin de séparer l'eau traitée de la boue épaissie, cette dernière étant ensuite recyclée en tête du traitement d'aération, l'excès de boue étant évacué en continu, ce procédé étant caractérisé en ce que l'on injecte un matériau inerte d'origine minérale dans la boue activée, ce matériau étant immédiatement dispersé de manière homogène dans la boue activée, afin de créer une culture mixte comportant à la fois et en un seul floc bactérien, des espèces hétérotrophes libres et autotrophes partiellement fixées sur les particules dudit matériau à l'intérieur du floc, la structure de ce dernier, qui contient de l'ordre de 40 à 65 % de matière organique, le reste étant ledit matériau inerte, étant constituée d'une ou de plusieurs particules dudit matériau entourées de boue activée, et en ce que l'extraction de la boue en excès s'effectue en continu et sans séparation du matériau injecté.

2. Procédé selon la revendication 1 caractérisé en ce que le matériau inerte d'origine minérale est injecté dans le circuit de recirculation des boues.

3. Procédé selon l'une des revendications 1 ou 2 caractérisé en ce que l'injection dudit matériau minéral inerte s'effectue selon un mode continu.

4. Procédé selon l'une des revendications 1 ou 2 caractérisé en ce que l'injection dudit matériau minéral inerte s'effectue selon un mode discontinu.

5. Procédé selon l'une quelconque des revendications précédentes caractérisé en ce que l'injection dudit matériau minéral inerte est effectuée sous la forme d'une suspension.

6. Procédé selon l'une quelconque des revendications précédentes caractérisé en ce que l'injection dudit matériau minéral inerte est effectuée sous forme pulvérulante.

7. Procédé selon l'une quelconque des revendications précédentes caractérisé en ce que le matériau minéral inerte présente une masse volumique supérieure à 2000 kg/m3 et une granulométrie de l'ordre de 50 à 250 microns, et une bonne aptitude à la fixation de la biomasse.

8. Procédé selon l'une quelconque des revendications précédentes caractérisé en ce que le matériau minéral inerte est injecté selon une proportion de l'ordre de 80 à 150 g/m3 d'eau.

9. Procédé selon l'une quelconque des revendications précédentes caractérisé en ce que le matériau minéral inerte est de l'argile kaolinique, issue de l'exploitation du kaolin.

10. Procédé selon l'une quelconque des revendications précédentes caractérisé en ce que la sélection des micro-organismes formant le floc nouvellement créé est effectuée en milieu anoxique/oxique.

11. Procédé selon l'une quelconque des revendications précédentes caractérisé en ce que la sélection des micro-organismes formant le floc nouvellement créé est effectuée en milieu exclusivement anoxique ou anoxique/anaérobie.
